# EUROPEAN PATENT APPLICATION

(11) **EP 4 741 110 A1**
(43) Date of publication of application: **13.05.2026**
(21) Application number: 24851784.9
(22) Date of filing: 02.08.2024
(51) Int. Cl.: B25J 9/06

(54) **ARTICULATED ROBOT**

(30) Priority: 09.08.2023 JP 2023129936
(71) Applicant: KAWASAKI JUKOGYO KABUSHIKI KAISHA, Kobe-shi, Hyogo 650-8670 (JP)
(72) Inventor: TATSUTA, Norihisa, Kobe-shi, Hyogo 650-8670 (JP); YAMAMOTO, Masato, Kobe-shi, Hyogo 650-8670 (JP); KAWATA, Takuya, Kobe-shi, Hyogo 650-8670 (JP)
(74) Representative: Müller-Boré & Partner Patentanwälte PartG mbB
(86) International application number: PCT/JP2024/027783
(87) International publication number: WO 2025/033359

(57) **Abstract**

The articulated robot 1 includes: a first joint (joint JT1) including a first support portion (support portion 23) and a first operation portion (first end 311); a first actuator (actuator 41) whose first body (body 411) is located on the opposite side of the first operation portion from the first support portion; a second joint (joint JT2) including a second support portion (second end 312) and a second operation portion (first end 321); and a second actuator (actuator 42) in which, in a direction in which a first axis (axis Ax1) or a second axis (axis Ax2) extends, a direction in which a second shaft (shaft 422) projects is opposite to a direction in which a first shaft (shaft 421) projects.

## Description

### TECHNICAL FIELD

The present invention relates to articulated robots.

### BACKGROUND ART

Patent Document 1 describes a conventional articulated robot. The conventional articulated robot is a seven-joint robot. The conventional articulated robot includes a first arm, a second arm, and a third arm connected in series. An actuator of the first arm swings the first arm about a horizontal axis, an actuator of the second arm swings the second arm about a horizontal axis, and an actuator of the third arm swings the third arm about a horizontal axis. The three actuators are located on the same side in a direction along the horizontal axis, with respect to the first arm and the second arm.

### CITATION LIST

### PATENT DOCUMENT

PATENT DOCUMENT 1: Japanese Patent No. 5975129

### SUMMARY OF THE INVENTION

### TECHNICAL PROBLEM

In an articulated robot with joints connected in series, a particular joint supports one or more other joints, and thus the supporting strength of that particular joint is increased. For example, a typical six-axis articulated robot includes a first arm connected to a swivel section and a second arm connected to the first arm. A particular joint that connects the swivel section and the first arm has high supporting strength in order to support a second joint that connects the first arm and the second arm.

In the conventional articulated robot, the joint that connects the swivel section and the first arm is desired to have higher supporting strength than a joint of a typical six-axis articulated robot. This is because the conventional articulated robot has a larger number of arms and actuators than the typical six-axis articulated robot.

The joint of the conventional articulated robot includes a connection portion of the swivel section and a proximal end of the first arm supported by the connection portion. The actuator is fixed to the connection portion. Since the actuator is fixed to the connection portion, it is difficult to enlarge the connection portion to increase the supporting strength of the joint. However, in the conventional articulated robot, the supporting strength of the joint cannot be increased.

### SOLUTION TO THE PROBLEM

The technology disclosed herein relates to an articulated robot. The articulated robot includes:
a first joint including a first support portion and a first operation portion arranged in a direction in which a horizontal first axis extends, the first operation portion being rotatable relative to the first support portion about the first axis;
a first actuator including a first body and a first shaft projecting from the first body and connected to the first joint, the first actuator being configured to drive the first joint through the first shaft, and the first body being located on the opposite side of the first operation portion from the first support portion;
a second joint connected in series with the first joint and supported by the first joint, the second joint including a second support portion and a second operation portion supported by the second support portion, the second operation portion being rotatable relative to the second support portion about a second axis parallel to the first axis; and
a second actuator including a second body and a second shaft projecting from the second body and connected to the second joint, the second actuator being configured to drive the second joint through the second shaft, the second shaft projecting, in a direction in which the first axis or the second axis extends, opposite to a direction in which the first shaft projects.

### ADVANTAGES OF THE INVENTION

Since the first joint of the articulated robot does not directly support the first actuator, the first joint can have high supporting strength.

### BRIEF DESCRIPTION OF THE DRAWINGS

[FIG. 1] FIG. 1 is a rear view of an articulated robot.
[FIG. 2] FIG. 2 is a side view of the articulated robot.
[FIG. 3] FIG. 3 is a partially sectional rear view of the articulated robot, showing first to third joints and first to third actuators in an enlarged view.
[FIG. 4] FIG. 4 is a partially sectional rear view of an articulated robot according to a modification.
[FIG. 5] FIG. 5 is a partially sectional rear view of an articulated robot according to a modification.
[FIG. 6] FIG. 6 is a partially sectional rear view of an articulated robot according to a modification.

### DESCRIPTION OF EMBODIMENTS

An embodiment of an articulated robot will now be described with reference to the drawings. The articulated robot described herein is merely an example.

### (Overall Configuration of Articulated Robot)

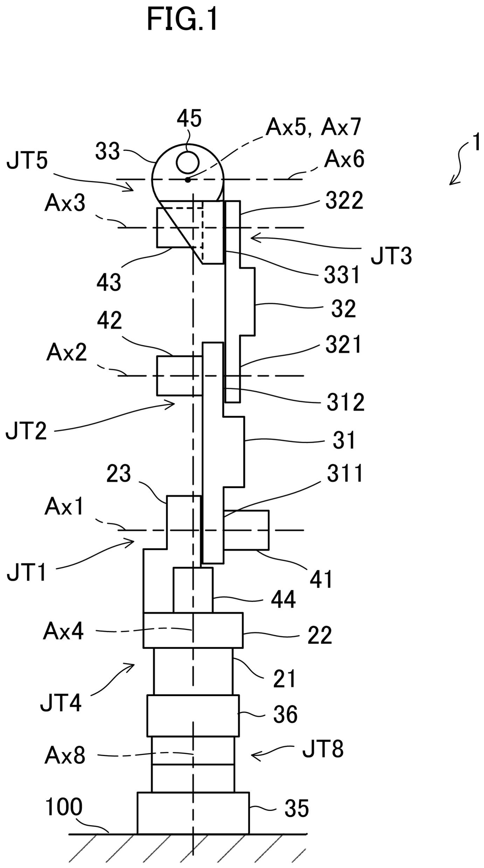

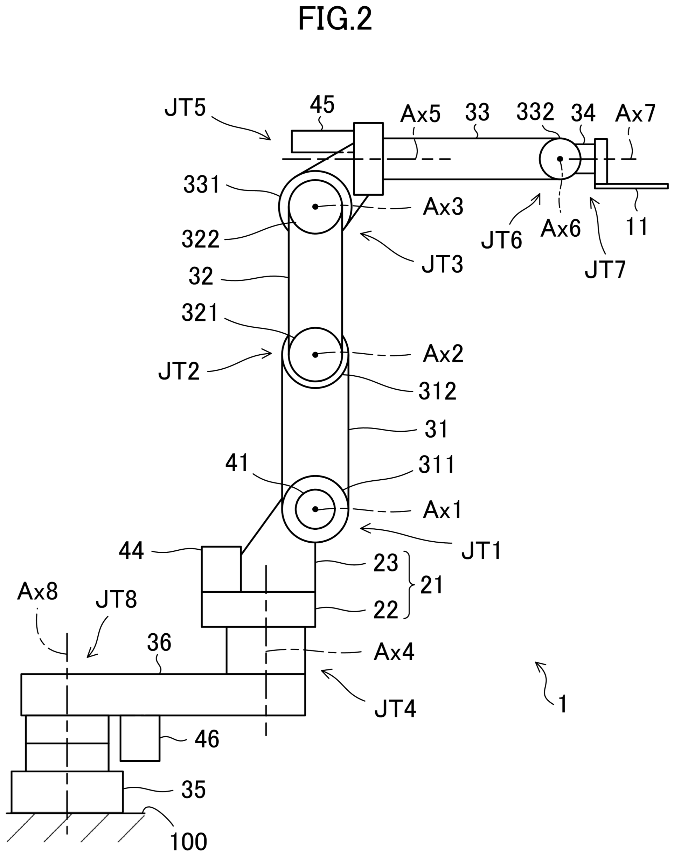

FIG. 1 shows an articulated robot 1. FIG. 1 is a rear view of the articulated robot 1. FIG. 2 is a side view of the articulated robot 1. The articulated robot 1 is a vertical articulated robot. The articulated robot 1 is a seven-axis robot including joints JT1 to JT7.

The articulated robot 1 is used, for example, in the logistics field. Specifically, the articulated robot 1 loads articles onto a truck bed or into a container, or unloads articles from a truck bed or a container. In FIG. 1 or 2, the articulated robot 1 is installed on a floor 100. The floor 100 is, for example, a floor of a truck bed. The articulated robot 1 may be placed on a cart and moved by the cart. The application of the articulated robot 1 is not limited to logistics applications. The articulated robot 1 can be used in various fields.

The articulated robot 1 includes a base 21. The base 21 is not an essential element of the articulated robot 1. The base 21 includes a base body 22. The base body 22 has a flat upper surface. The base 21 includes a support portion 23. The support portion 23 is fixed to the upper surface of the base body 22.

The articulated robot 1 includes a first link 31. The joint JT1 couples the first link 31 and the base 21. The first link 31 is an arm including a first end 311 and a second end 312. The first end 311 of the first link 31 is coupled to the support portion 23 of the base 21. The joint JT1 includes the first end 311 and the support portion 23. The first link 31 rotates relative to the base 21 about an axis Ax1. The axis Ax1 is a horizontal axis parallel to the floor 100.

The articulated robot 1 includes a second link 32. The joint JT2 couples the second link 32 and the first link 31. The second link 32 is an arm including a first end 321 and a second end 322. The first end 321 of the second link 32 is coupled to the second end 312 of the first link 31. The joint JT2 includes the first end 321 of the second link 32 and the second end 312 of the first link 31. The second link 32 rotates relative to the first link 31 about an axis Ax2. The axis Ax2 is an axis parallel to the axis Ax1.

The articulated robot 1 includes a third link 33. The third link 33 is not an essential element of the articulated robot 1. The joint JT3 couples the third link 33 and the second link 32. The third link 33 includes a first end 331 and a second end 332. The first end 331 of the third link 33 is coupled to the second end 322 of the second link 32. The joint JT3 includes the first end 331 of the third link 33 and the second end 322 of the second link 32. The third link 33 rotates relative to the second link 32 about an axis Ax3. The axis Ax3 is an axis parallel to the axes Ax1 and Ax2.

The base 21 swivels about an axis Ax4. The axis Ax4 is an axis perpendicular to the floor 100 and orthogonal to the axis Ax1. The base 21 is the joint JT4. The joint JT4 swivels the base 21 about the axis Ax4. As the base 21 swivels, the first link 31, the second link 32, and the third link 33 swivel about the axis Ax4.

The joint JT5 rotates the third link 33 about an axis Ax5. The axis Ax5 is an axis orthogonal to the axis Ax1.

The articulated robot 1 includes a fourth link 34. The fourth link 34 is not an essential element of the articulated robot 1. The joint JT6 couples the fourth link 34 and the third link 33. The joint JT6 rotates the fourth link 34 relative to the third link 33 about an axis Ax6. The axis Ax6 is an axis parallel to the axis Ax1.

The joint JT7 rotates the fourth link 34 about an axis Ax7. The axis Ax7 is an axis orthogonal to the axis Ax1.

The articulated robot 1 includes a hand 11 as an end effector. The hand 11 holds an article. The hand 11 that holds an article is not an essential element of the articulated robot 1. The end effector of the articulated robot 1 is selected in accordance with the application of the articulated robot 1.

The articulated robot 1 includes a joint JT8. The articulated robot 1 may be referred to as an eight-axis robot. The articulated robot 1 includes a second base 35. The second base 35 is interposed between the floor 100 and the base 21. The base 21 and the second base 35 are offset from each other in a horizontal direction. For distinction from the second base 35, the base 21 may hereinafter be referred to as first base 21.

The joint JT8 swivels the second base 35 about an axis Ax8. The axis Ax8 is an axis parallel to the axis Ax4 and orthogonal to the axis Ax1.

The articulated robot 1 includes a horizontal link 36. The horizontal link 36 extends in a horizontal direction. A first end of the horizontal link 36 is fixed to the second base 35. When the second base 35 swivels, the horizontal link 36 rotates about the axis Ax8. The first base 21 is fixed to a second end of the horizontal link 36. The horizontal link 36 and the second base 35 support the seven-axis articulated robot 1. When the horizontal link 36 rotates, the position of the seven-axis articulated robot 1 changes.

The second base 35 and the horizontal link 36 are not essential elements of the articulated robot 1.

The articulated robot 1 includes actuators. Each actuator is a power source that drives a joint. Each actuator is, for example, an electric motor. The electric motor is, for example, a servo motor. The electric motor may be a stepper motor.

FIG. 1 or 2 shows, among the actuators included in the articulated robot 1, an actuator 41, an actuator 42, an actuator 43, an actuator 44, an actuator 45, and an actuator 46.

The actuator 41 is connected to the joint JT1. The actuator 41 drives the joint JT1. The actuator 42 is connected to the joint JT2. The actuator 42 drives the joint JT2. The actuator 43 is connected to the joint JT3. The actuator 43 drives the joint JT3. The actuator 43 is not an essential element of the articulated robot 1.

The actuator 44 is connected to the joint JT4. The actuator 44 drives the joint JT4. The actuator 45 is connected to the joint JT5. The actuator 45 drives the joint JT5. The actuator 46 is connected to the joint JT8. The actuator 46 drives the joint JT8. The actuator 44, the actuator 45, and the actuator 46 are not essential elements of the articulated robot 1.

Each actuator is electrically connected to a controller and receives a control signal from the controller. The controller is a computer including at least a processor, a memory, and an interface. The actuators operate in accordance with the control signals. Through operation of the actuators, the articulated robot 1 performs work.

### (Arrangement of Actuators)

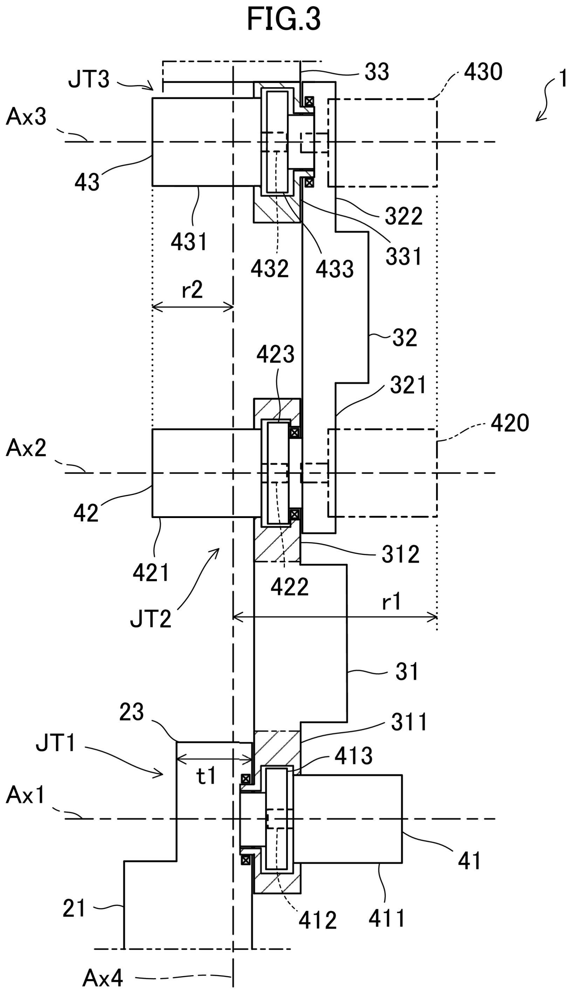

The arrangement of the actuator 41, the actuator 42, and the actuator 43 will be described with reference to FIG. 3. FIG. 3 is a partially sectional rear view of the articulated robot 1. The joint JT1, the joint JT2, and the joint JT3 of the articulated robot 1 are connected in series. The joint JT1 supports the joint JT2 and the joint JT3. The joint JT2 supports the joint JT3.

As described above, the joint JT1 includes the first end 311 of the first link 31 and the support portion 23 of the first base 21. The first end 311 and the support portion 23 are arranged in a direction in which the axis Ax1 extends. The support portion 23 supports the first end 311 such that the first link 31 rotates about the axis Ax1.

The actuator 41 includes a body 411 and a shaft 412. The shaft 412 projects from the body 411 in the direction in which the axis Ax1 extends. The shaft 412 is a rotor of an electric motor and is an output shaft of the actuator 41. The actuator 42 and the actuator 43 described below have the same structure as the actuator 41.

The shaft 412 is connected to the joint JT1. More specifically, in the example of FIG. 3, the shaft 412 is coaxial with the axis Ax1 and is connected to the joint JT1 via a reducer 413. The reducer 413 reduces the output speed of the actuator 41 and outputs the reduced output to the joint JT1. The reducer 413 is, for example, a planetary gear mechanism. However, the reducer 413 is not limited to a planetary gear mechanism. A reducer 423 and a reducer 433 described below are also the same as the reducer 413.

The first link 31 supports the body 411. More specifically, the body 411 is located on the opposite side of the first end 311 from the support portion 23 in the direction in which the axis Ax1 extends. The body 411 projects from the first end 311 in the direction in which the axis Ax1 extends. The body 411 is fixed to the first end 311. When the first link 31 rotates, the body 411 rotates together with the first link 31 about the axis Ax1.

As described above, the joint JT2 includes the first end 321 of the second link 32 and the second end 312 of the first link 31. The first end 321 and the second end 312 are arranged in a direction in which the axis Ax2 extends. The second end 312 supports the first end 321 such that the second link 32 rotates about the axis Ax2.

The actuator 42 includes a body 421 and a shaft 422. The shaft 422 projects from the body 421 in the direction in which the axis Ax2 extends.

The shaft 422 is coaxial with the axis Ax2 and is connected to the joint JT2 via a reducer 423. In the direction in which the axis Ax1 or the axis Ax2 extends, the direction in which the shaft 422 projects is opposite to the direction in which the shaft 412 projects. That is, the shaft 412 projects from right to left in FIG. 3, and the shaft 422 projects from left to right in FIG. 3.

The first link 31 supports the body 421. More specifically, the body 421 is located on the opposite side of the second end 312 from the first end 321 in the direction in which the axis Ax2 extends. In other words, the actuator 41 and the actuator 42 are located on opposite sides of the first link 31. In FIG. 3, the actuator 41 is located on the right side of the first link 31, and the actuator 42 is located on the left side of the first link 31. The body 421 projects from the second end 312 in the direction in which the axis Ax2 extends. The body 421 is fixed to the second end 312.

As described above, the joint JT3 includes the first end 331 of the third link 33 and the second end 322 of the second link 32. The first end 331 and the second end 322 are arranged in a direction in which the axis Ax3 extends. The second end 322 supports the first end 331 such that the third link 33 rotates about the axis Ax3.

The actuator 43 includes a body 431 and a shaft 432. The shaft 432 projects from the body 431 in the direction in which the axis Ax3 extends.

The shaft 432 is coaxial with the axis Ax3 and is connected to the joint JT3 via a reducer 433. In the direction in which the axis Ax1, the axis Ax2, or the axis Ax3 extends, the direction in which the shaft 432 projects is opposite to the direction in which the shaft 412 projects and is the same as the direction in which the shaft 422 projects.

The third link 33 supports the body 431. More specifically, the body 431 is located on the opposite side of the first end 331 from the second end 322 in the direction in which the axis Ax3 extends. The actuator 42 and the actuator 43 are located on the same side of the second link 32. The actuator 41 and the actuator 43 are located on the opposite sides of the first link 31 and the second link 32. The body 431 projects from the first end 331 in the direction in which the axis Ax3 extends.

### (Functions and Effects)

The articulated robot 1 is a seven-axis vertical articulated robot. Since the seven-axis articulated robot 1 has a high degree of freedom in orientation, it can efficiently transport articles in a limited space such as a truck bed. The articulated robot 1 is also an eight-axis articulated robot including the second base 35. Since the eight-axis articulated robot 1 has an even higher degree of freedom in orientation, it can transport articles more efficiently in a limited space.

High supporting strength is desired for the joint JT1 of the articulated robot 1. This is because the joint JT1 supports at least the joint JT2, the joint JT3, the actuator 42, and the actuator 43 connected in series with the joint JT1. Since the articulated robot 1 is a seven-axis vertical articulated robot, it has a larger number of joints and actuators than a typical six-axis vertical articulated robot. Accordingly, higher supporting strength is desired for the joint JT1.

The joint JT1 supporting the joint JT2 and the joint JT3 may also be expressed as the joint JT1 being located closer to the first base 21 than the joint JT2 and the joint JT3. The joint JT2 and the joint JT3 may also be expressed as being located above the joint JT1.

The actuator 41 is located on the opposite side of the first end 311 of the first link 31 from the support portion 23 of the first base 21. The first end 311 supports the actuator 41. The support portion 23 does not directly support the actuator 41. As shown in FIG. 3, since the support portion 23 does not directly support the actuator 41, the thickness t1 of the support portion 23 can be increased without being affected by the actuator 41. More specifically, the thickness t1 is the thickness t1 in the direction in which the axis Ax1 extends. Since the thickness t1 of the support portion 23 is increased, the joint JT1 can have the required supporting strength.

In a conventional design concept, actuators in an articulated robot with joints connected in series are typically located on the same side of a link. The actuator 41 of the articulated robot 1 is located on the opposite side of the first link 31 from the support portion 23. According to the conventional design concept, as indicated by phantom lines in FIG. 3, an actuator 420 and an actuator 430 would be located on the same side of the first link 31 and the second link 32 as the actuator 41. However, arranging the actuator 420 and the actuator 430 on the same side as the actuator 41 increases a turning radius r1. The turning radius as used herein refers to the distance, in a direction orthogonal to the axis Ax4 that is the rotation axis of the articulated robot 1, from the axis Ax4 to an end of an actuator. An increase in the turning radius r1 increases a moment about the axis Ax4 of the articulated robot 1. Since an increased turning radius r1 also increases the size of the articulated robot 1, it is disadvantageous for a robot that performs work in a limited space.

In contrast, in the articulated robot 1, the orientation of the actuator 42 is opposite to that of the actuator 41. That is, the direction in which the shaft 422 projects is opposite to the direction in which the shaft 412 projects. With the reversal of the orientation of the actuator 42, the actuator 42 is positioned on the opposite side of the first link 31 from the actuator 41. Positioning the actuator 42 on the opposite side from the actuator 41 reduces a turning radius r2. The fact that the actuator 42, which is located farther from the first base 21, has a small turning radius r2 is effective in reducing a moment about the axis Ax4 of the articulated robot 1. The turning radius of the actuator 41 is relatively large. However, since the actuator 41 is located close to the first base 21, disadvantages resulting from the large turning radius are substantially negligible.

With the positional relationship among the joint JT1, the actuator 41, the joint JT2, and the actuator 42, the articulated robot 1 can achieve (a) an improvement in the supporting strength of the joint and (b) a reduction in the turning radius. In the articulated robot 1 shown in FIG. 3, the joint JT1 corresponds to a first joint including a first support portion and a first operation portion arranged in a direction in which a horizontal first axis extends. The first axis is the axis Ax1, the first support portion is the support portion 23, and the first operation portion is the first end 311. The actuator 41 corresponds to a first actuator whose body 411 is located on the opposite side of the first operation portion from the first support portion. The joint JT2 corresponds to a second joint that is connected in series with the first joint and is supported by the first joint. The second axis of the second joint is the axis Ax2, the second support portion is the second end 312, and the second operation portion is the first end 321. The actuator 42 corresponds to a second actuator in which the direction in which its shaft projects is opposite to the direction in which a first shaft projects. The first shaft is the shaft 412 of the actuator 41.

In the articulated robot 1, the orientation of the actuator 43 is also opposite to that of the actuator 41. The orientation of the actuator 43 is the same as that of the actuator 42. That is, the direction in which the shaft 432 projects is opposite to the direction in which the shaft 412 projects and is the same as the direction in which the shaft 422 projects. The actuator 43 is positioned on the opposite side of the first link 31 and the second link 32 from the actuator 41. The actuator 43 also reduces the turning radius r2. The fact that the actuator 43, which is located even farther from the first base 21, has a small turning radius r2 is effective in reducing a moment about the axis Ax4 of the articulated robot 1. In the articulated robot 1 shown in FIG. 3, the joint JT3 corresponds to a third joint that is connected in series with the first joint and the second joint and is supported by the first joint. The third axis of the third joint is the axis Ax3, the third support portion is the second end 322, and the third operation portion is the first end 331. The actuator 43 corresponds to a third actuator in which the direction in which its shaft projects is opposite to the direction in which a first shaft projects and is the same as the direction in which a second shaft projects. The first shaft is the shaft 412 of the actuator 41, and the second shaft is the shaft 422 of the actuator 42.

Reducing the turning radius r2 of the actuator 42 and the actuator 43 reduces the size of the articulated robot 1. The articulated robot 1 is advantageous for use in a limited space.

In the articulated robot 1 shown in FIG. 3, the axis Ax4 is located at a position intersecting the actuator 42 and the actuator 43. The position of the axis Ax4 is not limited to this position.

In the articulated robot 1 shown in FIG. 3, focusing only on the positional relationship between the actuator 41 and the actuator 43 among the actuator 41, the actuator 42, and the actuator 43, the joint JT1 corresponds to a first joint, and the actuator 41 corresponds to a first actuator. The joint JT3 corresponds to a second joint that is connected in series with the first joint and is supported by the first joint, and the actuator 43 corresponds to a second actuator in which the direction in which its shaft projects is opposite to the direction in which a first shaft projects. The first shaft is the shaft 412 of the actuator 41. With the positional relationship among the joint JT1, the actuator 41, the joint JT3, and the actuator 43, the articulated robot 1 can achieve (a) an improvement in the supporting strength of the joint and (b) a reduction in the turning radius.

### (First Modification)

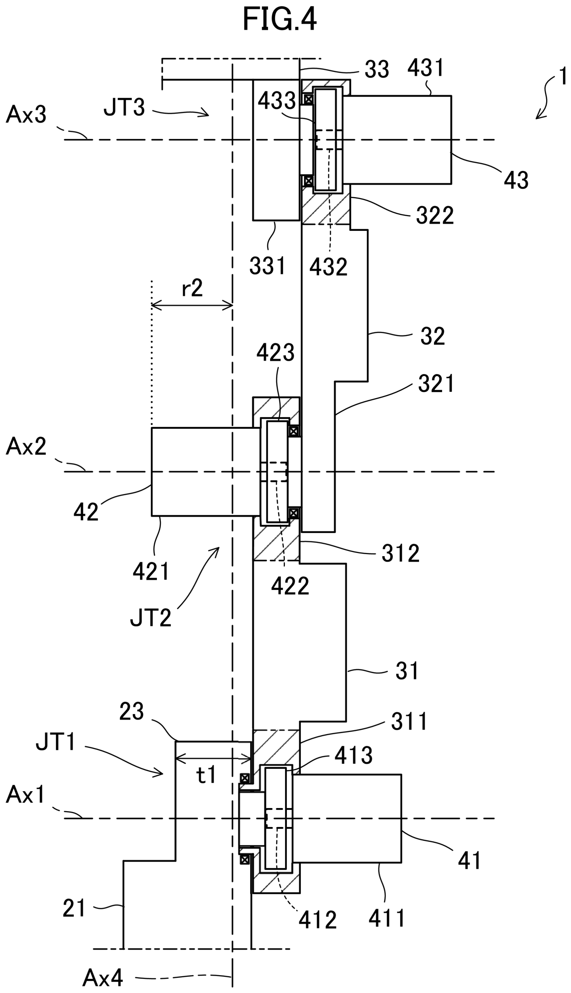

FIG. 4 shows a modification regarding the position of the actuator 43. The orientation of the actuator 43 is the same as that of the actuator 41. The orientation of the actuator 43 is opposite to that of the actuator 42. That is, the direction in which the shaft 432 projects is the same as the direction in which the shaft 412 projects and is opposite to the direction in which the shaft 422 projects.

The actuator 43 is located on the same side of the first link 31 and the second link 32 as the actuator 41. The second end 322 of the second link 32 supports the body 431. The body 431 projects from the second end 322 in the direction in which the axis Ax3 extends. The turning radius of the actuator 43 is relatively large. However, the actuator 43 for the joint JT3 is smaller or lighter than the actuator 41 or the actuator 42. This is because the joint JT3 is a joint located closer to a distal end of the articulated robot 1 than the joint JT1 and the joint JT2. Therefore, the influence of the large turning radius of the actuator 43 on the articulated robot 1 is limited.

With the positional relationship among the joint JT1, the actuator 41, the joint JT2, and the actuator 42, the articulated robot 1 according to the first modification can achieve the above-described effects, that is, (a) an improvement in the supporting strength of the joint and (b) a reduction in the turning radius. The joint JT1 corresponds to a first joint, and the actuator 41 corresponds to a first actuator. The joint JT2 corresponds to a second joint, and the actuator 42 corresponds to a second actuator.

### (Second Modification)

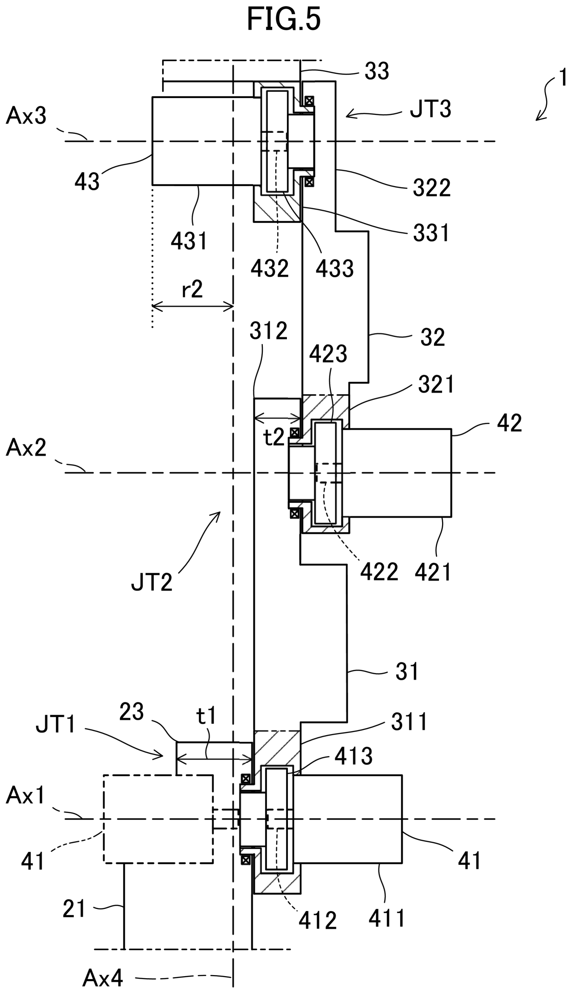

FIG. 5 shows a modification regarding the position of the actuator 42. The orientation of the actuator 42 is the same as that of the actuator 41. The orientation of the actuator 42 is opposite to that of the actuator 43. That is, the direction in which the shaft 422 projects is the same as the direction in which the shaft 412 projects, and is opposite to the direction in which the shaft 432 projects.

The actuator 42 is positioned on the same side of the first link 31 as the actuator 41. The first end 321 of the second link 32 supports the body 421. The body 421 projects from the first end 321 in the direction in which the axis Ax2 extends.

The first end 321 of the second link 32 supports the actuator 42. In the joint JT2, the second end 312 of the first link 31, which supports the first end 321, does not directly support the actuator 42. Accordingly, the thickness t2 of the second end 312 can be increased. The joint JT2, which supports at least the joint JT3 and the actuator 43, can therefore have required strength.

The actuator 43 is positioned on the opposite side of the first link 31 and the second link 32 from the actuator 41 and the actuator 42. The actuator 43 reduces the turning radius r2. A moment about the axis Ax4 of the articulated robot 1 is small.

In the articulated robot 1 according to the second modification, focusing only on the positional relationship between the actuator 42 and the actuator 43 among the actuator 41, the actuator 42, and the actuator 43, the joint JT2 corresponds to a first joint including a first support portion and a first operation portion arranged in a direction in which a horizontal first axis extends. The first axis is the axis Ax2, the first support portion is the second end 312, and the first operation portion is the first end 321. The actuator 42 corresponds to a first actuator whose body 421 is located on the opposite side of the first operation portion from the first support portion. The joint JT3 corresponds to a second joint that is connected in series with the first joint and is supported by the first joint, and the actuator 43 corresponds to a second actuator in which the direction in which its shaft projects is opposite to the direction in which a first shaft projects. The first shaft is the shaft 422 of the actuator 42. With the positional relationship among the joint JT2, the actuator 42, the joint JT3, and the actuator 43, the articulated robot 1 according to the second modification can achieve the above-described effects, that is, (a) an improvement in the supporting strength of the joint and (b) a reduction in the turning radius.

In the second modification, the orientation of the actuator 41 may be reversed as indicated by phantom lines in FIG. 5. The body 411 of the actuator 41 may be supported by the support portion 23 of the first base 21.

In the articulated robot 1 according to the second modification, focusing only on the positional relationship between the actuator 41 and the actuator 43 among the actuator 41, the actuator 42, and the actuator 43, the joint JT1 corresponds to a first joint, and the actuator 41 corresponds to a first actuator. The joint JT3 corresponds to a second joint that is connected in series with the first joint and is supported by the first joint, and the actuator 43 corresponds to a second actuator in which the direction in which its shaft projects is opposite to the direction in which a first shaft projects. The first shaft is the shaft 412 of the actuator 41. With the positional relationship among the joint JT1, the actuator 42, the joint JT3, and the actuator 43, the articulated robot 1 according to the second modification can achieve the above-described effects, that is, (a) an improvement in the supporting strength of the joint and (b) a reduction in the turning radius.

### (Third Modification)

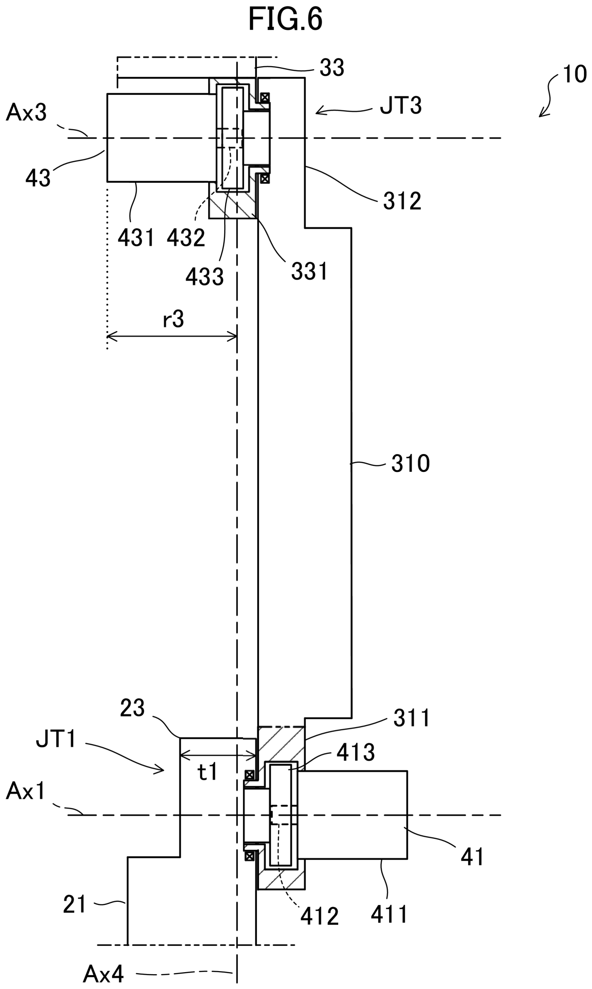

FIG. 6 shows a modification regarding the number of joints of the articulated robot. An articulated robot 10 may be a six-axis vertical articulated robot. Compared with the articulated robot 1 shown in FIG. 3, the second link 32 and the actuator 42 are omitted in the articulated robot 10. The joint JT3 couples the second end 312 of the first link 310 and the first end 331 of the third link 33. The joint JT3 includes the second end 312 and the first end 331.

In the articulated robot 10 according to the third modification, the joint JT1 corresponds to a first joint, and the actuator 41 corresponds to a first actuator whose body 411 is located on the opposite side of the first end 311 that is the first operation portion from the support portion 23 that is the first support portion. The joint JT3 corresponds to a second joint that is connected in series with the joint JT1 and is supported by the joint JT1, and the actuator 43 corresponds to a second actuator in which the direction in which the shaft projects is opposite to the direction in which a first shaft projects. The first shaft is the shaft 412 of the actuator 41. With the positional relationship among the joint JT1, the actuator 41, the joint JT3, and the actuator 43, the articulated robot 10 according to the third modification can achieve the above-described effects, that is, (a) an improvement in the supporting strength of the joint and (b) a reduction in the turning radius r3.

### (Aspects)

The above embodiment is a specific example of the following aspects.

### (First Aspect)

An articulated robot (1, 10) including:
a first joint (JT1, JT2) including a first support portion (23, 312) and a first operation portion (311, 321) arranged in a direction in which a horizontal first axis (Ax1, Ax2) extends, the first operation portion (311, 321) being rotatable relative to the first support portion (23, 312) about the first axis (Ax1, Ax2);
a first actuator (41, 42) including a first body (411, 421) and a first shaft (412, 422) projecting from the first body (411, 421) and connected to the first joint (JT1, JT2), the first actuator (41, 42) being configured to drive the first joint (JT1, JT2) through the first shaft (412, 422), and the first body (411, 421) being located on the opposite side of the first operation portion (311, 321) from the first support portion (23, 312);
a second joint (JT2, JT3) connected in series with the first joint (JT1, JT2) and supported by the first joint (JT1, JT2), the second joint (JT2, JT3) including a second support portion (312, 322) and a second operation portion (321, 331) supported by the second support portion (312, 322), the second operation portion (321, 331) being rotatable relative to the second support portion (312, 322) about a second axis (Ax2, Ax3) parallel to the first axis (Ax1, Ax2); and
a second actuator (42, 43) including a second body (421, 431) and a second shaft (422, 432) projecting from the second body (421, 431) and connected to the second joint (JT2, JT3), the second actuator (42, 43) being configured to drive the second joint (JT2, JT3) through the second shaft (422, 432), the second shaft (422, 432) projecting, in a direction in which the first axis (Ax1, Ax2) or the second axis (Ax2, Ax3) extends, opposite to a direction in which the first shaft (412, 422) projects.

Since the first support portion (23, 312) does not directly support the first actuator (41, 42), the thickness (t1, t2) of the first support portion (23, 312) can be increased. Accordingly, the first joint (JT1, JT2) can have high supporting strength.

In the first joint (JT1, JT2) and the second joint (JT2, JT3) connected in series, the orientation of the second actuator (42, 43) is opposite to that of the first actuator (41, 42). Therefore, the turning radius (r2, r3) is reduced. The reduced turning radius (r2, r3) reduces the moment generated in the articulated robot (1, 10). In addition, the reduced turning radius (r2, r3) reduces the size of the articulated robot (1, 10).

### (Second Aspect)

The articulated robot (1, 10) of the first aspect, wherein
the first body (411, 421) is located on a first side of the first joint (JT1, JT2) in the direction in which the first axis (Ax1, Ax2) or the second axis (Ax2, Ax3) extends, and
the second body (421, 431) is located on a second side of the second joint (JT2, JT3) opposite to the first side in the direction in which the first axis (Ax1, Ax2) or the second axis (Ax2, Ax3) extends.

Since the first actuator (41, 42) and the second actuator (42, 43) are located on the opposite sides of the first joint (JT1, JT2) or the second joint (JT2, JT3), the turning radius (r2, r3) of the articulated robot (1, 10) can be reduced.

### (Third Aspect)

The articulated robot (1, 10) of the second aspect, wherein the first operation portion (311, 321) supports the first body (411, 421).

Since the first support portion (23, 312) does not directly support the first body (411, 421), the supporting strength of the first support portion (23, 312) can be improved.

### (Fourth Aspect)

The articulated robot (1, 10) of the second or third aspect, wherein the second support portion (312) supports the second body (421).

Supporting the second body (421) by the second support portion (312) is advantageous for reducing the turning radius (r2) of the articulated robot (1, 10).

### (Fifth Aspect)

The articulated robot (1, 10) of any one of the first to fourth aspect, further including:
a third joint (JT3) connected in series with the first joint (JT1) and the second joint (JT2) and supported by the first joint (JT1), the third joint (JT3) including a third support portion (322) and a third operation portion (331) supported by the third support portion (322), the third operation portion (331) being rotatable relative to the third support portion (322) about a third axis (Ax3) parallel to the first axis (Ax1, Ax2); and
a third actuator (43) including a third body (431) and a third shaft (432) projecting from the third body (431) and connected to the third joint (JT3), the third actuator (43) being configured to drive the third joint (JT3) through the third shaft (432).

An increase in the number of joints increases the degree of freedom of orientation of the articulated robot (1, 10). The articulated robot (1, 10) is advantageous for performing work in a limited space.

### (Sixth Aspect)

The articulated robot (1, 10) of the fifth aspect, wherein
in a direction in which the first axis (Ax1), the second axis (Ax2), or the third axis (Ax3) extends, a direction in which the third shaft (432) projects is opposite to the direction in which the first shaft (412) projects and is the same as the direction in which the second shaft (422) projects.

Since both the second actuator (42) and the third actuator (43) are oriented opposite to the first actuator (41), the turning radius (r2) of the articulated robot (1, 10) can be reduced.

### (Seventh Aspect)

The articulated robot (1) of the fifth or sixth aspect, further including:
a base (21) that is a fourth joint (JT4) rotatable about a fourth axis (Ax4) orthogonal to the first axis (Ax1);
a first link (31) coupled to the base (21) via the first joint (JT1);
a second link (32) coupled to the first link (31) via the second joint (JT2);
a third link (33) coupled to the second link (32) via the third joint (JT3);
a fifth joint (JT5) by which the third link (33) is rotatable about a fifth axis (Ax5) orthogonal to the first axis (Ax1);
a fourth link (34) connected to the third link (33);
a sixth joint (JT6) interposed between the third link (33) and the fourth link (34), by which the fourth link (34) is rotatable relative to the third link (33) about a sixth axis (Ax6) parallel to the first axis (Ax1); and
a seventh joint (JT7) by which the fourth link (34) is rotatable about a seventh axis (Ax7) orthogonal to the first axis (Ax1).

The articulated robot (1) may be a seven-axis vertical articulated robot. A seven-axis vertical articulated robot can efficiently perform work in a limited space.

### (Eighth Aspect)

The articulated robot (1) of the seventh aspect, further including a hand 11 for holding an article, the hand 11 being supported by the fourth link 34.

The articulated robot (1) is suitable for use in the logistics field.

### DESCRIPTION OF REFERENCE CHARACTERS

- 1: Articulated Robot
- 10: Articulated Robot
- 11: Hand
- 21: Base
- 23: Support Portion (First Support Portion)
- 31: First Link
- 311: First End (First Operation Portion)
- 312: Second End (First Support Portion, Second Support Portion)
- 32: Second Link
- 321: First End (First Operation Portion, Second Operation Portion)
- 322: Second End (Second Support Portion, Third Support Portion)
- 33: Third Link
- 331: First End (Second Operation Portion, Third Operation Portion)
- 34: Fourth Link
- 35: Second Base
- 36: Horizontal Link
- 310: First Link
- 41: Actuator (First Actuator)
- 411: Body (First Body)
- 412: Shaft (First Shaft)
- 42: Actuator (First Actuator, Second Actuator)
- 421: Body (First Body, Second Body)
- 422: Shaft (First Shaft, Second Shaft)
- 43: Actuator (Second Actuator, Third Actuator)
- 431: Body (Second Body, Third Body)
- 432: Shaft (Second Shaft, Third Shaft)
- Ax1: Axis (First Axis)
- Ax2: Axis (First Axis, Second Axis)
- Ax3: Axis (Second Axis, Third Axis)
- Ax4: Axis
- Ax5: Axis
- Ax6: Axis
- Ax7: Axis
- Ax8: Axis
- JT1: Joint (First Joint)
- JT2: Joint (First Joint, Second Joint)
- JT3: Joint (Second Joint, Third Joint)
- JT4: Joint
- JT5: Joint
- JT6: Joint
- JT7: Joint
- JT8: Joint

## Claims

1. An articulated robot comprising:
a first joint including a first support portion and a first operation portion arranged in a direction in which a horizontal first axis extends, the first operation portion being rotatable relative to the first support portion about the first axis;
a first actuator including a first body and a first shaft projecting from the first body and connected to the first joint, the first actuator being configured to drive the first joint through the first shaft, and the first body being located on an opposite side of the first operation portion from the first support portion;
a second joint connected in series with the first joint and supported by the first joint, the second joint including a second support portion and a second operation portion supported by the second support portion, the second operation portion being rotatable relative to the second support portion about a second axis parallel to the first axis; and
a second actuator including a second body and a second shaft projecting from the second body and connected to the second joint, the second actuator being configured to drive the second joint through the second shaft, the second shaft projecting, in a direction in which the first axis or the second axis extends, opposite to a direction in which the first shaft projects.

2. The articulated robot of claim 1, wherein
the first body is located on a first side of the first joint in the direction in which the first axis or the second axis extends, and
the second body is located on a second side of the second joint opposite to the first side in the direction in which the first axis or the second axis extends.

3. The articulated robot of claim 2, wherein
the first operation portion supports the first body.

4. The articulated robot of claim 2 or 3, wherein
the second support portion supports the second body.

5. The articulated robot of any one of claims 1 to 4, further comprising:
a third joint connected in series with the first joint and the second joint and supported by the first joint, the third joint including a third support portion and a third operation portion supported by the third support portion, the third operation portion being rotatable relative to the third support portion about a third axis parallel to the first axis; and
a third actuator including a third body and a third shaft projecting from the third body and connected to the third joint, the third actuator being configured to drive the third joint through the third shaft.

6. The articulated robot of claim 5, wherein
in a direction in which the first axis, the second axis, or the third axis extends, a direction in which the third shaft projects is opposite to the direction in which the first shaft projects and is the same as the direction in which the second shaft projects.

7. The articulated robot of claim 5 or 6, further comprising:
a base that is a fourth joint rotatable about a fourth axis orthogonal to the first axis;
a first link coupled to the base via the first joint;
a second link coupled to the first link via the second joint;
a third link coupled to the second link via the third joint;
a fifth joint by which the third link is rotatable about a fifth axis orthogonal to the first axis;
a fourth link coupled to the third link;
a sixth joint interposed between the third link and the fourth link, by which the fourth link is rotatable relative to the third link about a sixth axis parallel to the first axis; and
a seventh joint by which the fourth link is rotatable about a seventh axis orthogonal to the first axis.

8. The articulated robot of claim 7, further comprising a hand for holding an article, the hand being supported by the fourth link.
